# EUROPEAN PATENT APPLICATION

(11) **EP 1 935 771 A2**
(43) Date of publication of application: **25.06.2008**
(21) Application number: 07017512.0
(22) Date of filing: 06.09.2007
(51) Int. Cl.: B62K 25/28, B62M 9/16

(54) **Improved transmission system applied to motorcycles for the insert of rear wheels of oversized section**

(30) Priority: 07.09.2006 IT PN20060067
(71) Applicant: Padoan, Alessandro, 33078 San Vito al Tagliamento (PN) (IT)
(72) Inventor: Padoan, Alessandro, 33078 San Vito al Tagliamento (PN) (IT)
(74) Representative: Da Riva, Ermanno

(57) **Abstract**

Improved transmission system applied to motorcycles for the insert of rear wheels of oversized section that is constituted by a swing arm (F) having an oversized distance between his arms (B) for the housing of oversized wheel (R), sif swing arm (F) being provided of seats (S), disposed subsequently to the seats (S1) of pivoting od said swing arm (F) for the housing in them (S), by known might, of a draft (A1) on a side of which (A1) are keyed two pinions (P2 and P3), the pinion (P2) results to be placed in an inner position respect to the pinion (P3), said pinions (P2-P3) resulting, the first (P2), connected by a chain (C1) to the pinion (P1) of the driven shaft of the gear box and the second pinion (P3) connected with a chain (C2) to the pinion (PR) solidally joint to the oversized wheel (R)

## Description

The present invention relates to an improved system of transmission that can be applied to motorcycles. Said system is particoularly idoneous to solve the problem of the insertion in the back swing arm of the motorcycle of wheel of oversized section, letterally wide tires, without introduce sensible or big modifications to the mechanical structure of the speed gear and to the gear box, i.e. without changes to the conformation of the exit of the driven shaft in a too much deep manner and in this way to avoid generation of lack of compensation and of problems to the same motorcycle.

Are commonly well-known some motorcycles models having a particolular conformation and style, i.e. that can be difinied as "customs", "chopper", the whole derivates from the motorcycles and from the style of Harley-Davidson motorcycles, or from the same Harley Davidson. This motorcycles and in good substance all the Harley -Davidson have the particoularity to be often modified by their owners in a plus or less evident way. Said modifications happens, the mos part of the times, to the aestethical carachteristics of the motorcycle without to do variations to the mechanical part. The owners of the above mentioned motorcycles often goes to expecialized garages for the realization of motorcycles derived from frames, engines and generally mechanical parts of Harley-Davidson to obtain motorcycles that are in the whole original and unique. In fact this unique carachter of the motorcycles of this particoular kind has brought to always more hight evolutions in the aestetic, but from a certain point of this last time the buyers of this motorcycles are no more satisfied only of the aestetical modifications, with redundant chromium-plating or with unique parts exclusively realized and constructed for a singoular motorcycle and because of this unique modela, but they are gone beyond doing modifications over all to the rear "section" of the motorcycle. This modification essentially is constituted by the enlargement of the section of the rear weel inside the same rear swing arm that hold it, often, rather in the most part of the cases, the rear swing arm is competely substituted with a new one that serves to the finality of the realization and with a bigger space between both the arms of the swinging arm for the housing of a wheel with a larger section than the conventional used this wheels are called wide tires.

This tendence to enlarge excessively the section of the rear wheel has token to some considerable constructive drawback because it has not involved the sole variation of the rear swing arm, but usually the variation of the mechanical conformation of the exit of the driven shaft too, i.e. of the intermediate shaft that goes out from the gear box and transmit the movement to the rear ring gear connected witht the wheel. In fact are on sale a series of "kit" for the modification of the motorcycles, i.e. for the installation of oversized transversal section, this "kit" are moreover very expensive, also really difficul in their installation. The greatest difect, moreover to the modification due to the changement of many parts of the driven shaft, is produced by the fact that said modification needs the installation of mechanical parts with the consequent substitution of the original parts, which changes the configuration of the motorcycle and bring the same motorcycle to have a lack of compensation in the distribution of the masses. For example, a system of modification of the transmission from the driven shaft to the rear wheel, involve the fact that a mass of about 20 Kilograms is placed on the exit side of the driven saft putting out of balance, on this side the motorcycle. To this is to add also the fact that anyway the rear wheel results not in the same line of the front wheel, i.e. watching frontally the motorcycle his wheels don't lie on the same transversal axis of symmetry of the motorcycle, but the rear wheel results lightly moved on one side with consequent ulteriour lack of compensation of the motorcycle,difficulties in the driving of the motorcycle, tiredness of the pilot and consequently less security on the road of the same pilot as well as of the persons on the road in that moment.

We do not go ulterioursly longer in the description of the difects and of the constructive problematics and of utilization of the various realization of modification of the transmission system known until to this moment.

The intent of the present invention is that to obviate to all the difects and drawback above mentioned and this is obtained with the transmission system of emproved type doing the object of the present invention.

For a better understand of the functional and utilizative carachteristics and of the advantges generate with this system, the whole in a preferred realizative and not limitative way is here below described with references to the enclosed drawings in which :
- the figure 1 is a plan wiev showing, with a breacking wiev, the exit of the pinion gear of the driven shaft of a relative gear box, that is connected to the transmission system that is the object of the invention;
- the figure 2 is a lateral wiev of the system shown in figure 1;
- the figure 3 is a perspectical wiev of the system represented in the orthogonal wiev in the figures before.

Is done to relevate that the common particoulars will be called with the same references, moreover the two chains that are present in the transmission system that is the object of the invention, for clarity, will be represented interrupted at the respective extremity.

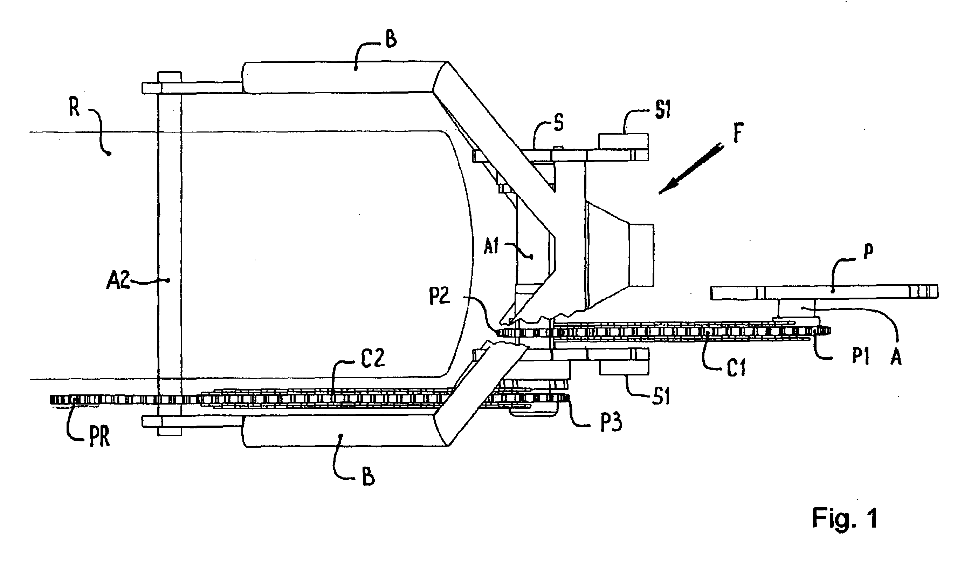

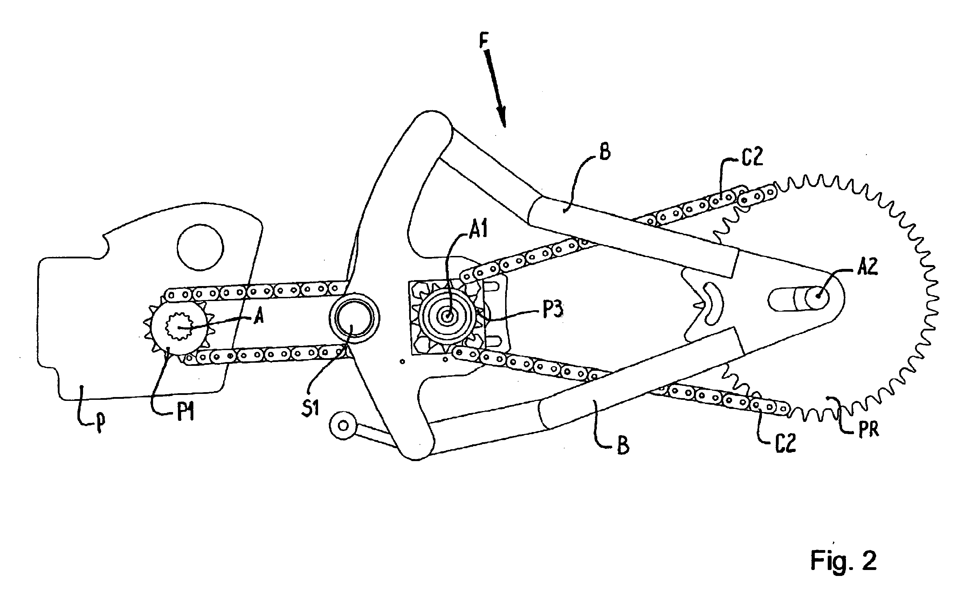

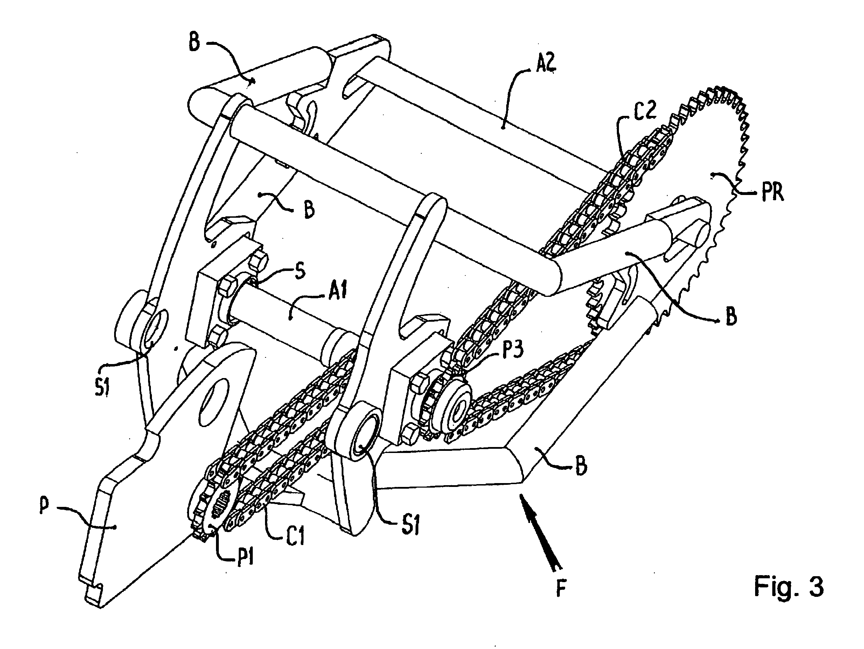

With particoular refererence to the above mentioned figures 1, 2 and 3 it will be noted in them the transmission system in the whole.

It will be described consequently and briefly the constructive particoulars od the invention.

Precisely will be noted the followuing particoulars:
- a metallic plate P that schematically will represent the carter of the gear box and will hold, always schematically, the driven shaft, i.e. the transmission gear shaft A of the same gear box to the pinion P1;
- the pinion P1 is keyed on the gear shaft A of the driven shaft of the gearbox;
- a first chain C1 engaging with the pinion P1 and with a second pinion P2;
- a second pinion P2 putted in evidence in the brocken wiev of figure 1, that results, as above mentioned, engaging with the chain C1 and is keyed.on the gear shaft A1;
- The gear shaft A1, placed internally to the arms B of the swing arm F and having said arms B enlarged respect to the common arms of the traditional swing arm.
- A third pinion P3 always keyed on the gear shaft A1, but placed in a zone that is more in proximity to one of the lateral arms B of the swing arm F
- A second chain C2, engaging on the above mentioned third pinion P3:

- A fourth pinion PR on which goes to engage the second chain C2 and that will joint solidally to the shaft A2 of the rear wheel R with a bigger dimension of section;
- For last,to sustain the gear shaft A1 and the relative pinion P2 and P3, as well as PR, it has to relevate that the swing arm F with the enlarged arms B and with opportune seats S for the housing of the gear shaft A1, and the seats S1 known for their function as rotational pivot of the swing arm F on a relative frame of a correspondent motorcycle.

A particoular attention will be posed in the brief description of the swing arm F.

Said swing arm F results realized, in the sense of the configuration, at the same manner of the normal swing arms conventionally utilized for the motorcycles described in the state of the art before said, the unique variations to their conformation will be two:
- the first variation will be the increased distance between the arms B of the swing arm F to the end to have a housing of wheels R with a bigger transversal section respet to the usually used wheels for the placement on the road of the motorcycles conventionaly produced;
- the second results to be constituted by two seats S for the housing of the gear shaft A1 that takes, keyed on it, respectively the pinion P2 and P3 that results to be placed intemalli to the arms B of a side of the swing arm F.

It will then be described in an essental manner, but sufficiently detailed the disposition of the above mentioned particoulars constituting the system that is the object of the present invention, and the relative working avoiding to illustrate particoulars known and then ininfluent from the point of wiev of the object of the invention.

It will be starting noting that in the figures 1, 2 and 3 is shown, in the manner of a schematic carter of the gear box, a plate P of sustain of the "driven shaft" A, i.e. the shaft that has exit from the gear box. On this first driven shaft A it results keyed a pinion P1 that by a first chain C1 it will transmit the rotational movement of the "driven shaft" A to a second pinion P2. The pinion P2, as above mentioned results placed inside the arms B of the swing arm F and is keyed on the shaft A1 that is supported on idoneous seats S obtained in a zone that is internal to the arms B of one side of the rear enlarged swing arm F. The seats S, of housing of the gear shaft A1, results realized subsequently to the seats S1 and opportunely spaced from the same (S1) that are working as known as a rotational pivot of the swing arm F. Always from the figures from 1 to 3 it will be noted that the same shaft A1 will be supported, conteporaneously to the pinion P2, a second pinion P3, having a position that is external respect to the pinion P2, i.e. disposed in the proximity of a lateral arm B of the swing arm F. Said pinion P3 that takes the movement from the shaft A1 moved from the second pinion P2 that is directly connected to he driven shaft of the box gear, i.e. to the pinion P1, that is solidally joint to the driven shaft, it will transmit consequently at his time the movement, by the chain C2, to the pinion PR that it will results keyed on the relative shaft A2 solidally joint to the oversized wheel R.

Said system, how clearly putted in evidence overall from figure 1, it permits the transmission of the rotational motion from the driven shaft A to the oversized wheel R in a precise manner, mantaining the rear wheel R, with oversized section, perfectly on the same axis of the longitudinal axis of the motorcycle, moreover it does not need of substantial modifications of mechanical kind, as the disassembly of the gear box and the consequent substitution of parts of the same gear box, in fact for the installation of the system object of the invention will be sufficient only to open the carter of the gear box, i.e. that which cover the driven shaft, to substitute the pulley, for toothed belts normaly existin on the model commonly produced of "series", with a pinion P1, to apply to it (P1) the chain C1 and then do the re-closure of the carter of the driven shaft without other actions or relevant mechanical operations that in the existing solutions are necessary. At this pint it wil be sufficient to install the rear swing arm F on the frame of the motorcycle pivoting it in a known mode the seats S1 on said frame by an opportune pivot. Then, always on said swing arm F, having his arms B at an oversized distance respect to the conventional swing arms, it will be inserted and fixed in rotation, in the seals S, by fixing might known and not described, as by support "flange", fixing screws and relative rolling bearing, said shaft A1. As above mentioned and exposed, the chain C1 connecting first said pinion P1 to the pinion P2, resulting (P1) the inner on the shaft A1 will transmit the motion to the second pinion P2, it too keyed on the same shaft A1, and said second pinion P2 by the chain C2 will transmit the motion to the pinion PR solidally joint with the oversized wheel R.

In conclusion, is to relevate that the system above mentioned it will realize primarly a precise transmission of the motion mantaining furtemore the rear wheel in the axis with the longitudinal axis of the vehicle and so giving moreover than a functional improvement to the transmission that with the traditional systems is not possible to realize, also a more rational configuration of the vehicle and a more rational disposition of the pilot as well as a bigger drive safety of the same vehicle. With the system object of the present invention will be avoided the always necessary and expensive mechanical intervents in specialized garages where, in the traditional systems it is modified the gear box, while, with this innovative system, in this case, also a non specialized person that is not in the state of the art, wil be able with few and simple operations to obtain the willed result without risks and/or damages for the motorcycle.

Furthermore the motorcycle with the system object of the invention will not be subjected to substantial modifications that otherwise moreover that the misalignement of the rear wheel respect to the longitudinal axis of the motorcycle in the traditional solution need the aplication of elements having a considerable weight that goes outside from one side of the motorcycle with consequet drawback above mentioned.

After all with the traditional systems the increase of weight on one side of the motorcycle has as conseguence the unbalance of the same motorcycle, consequantly his drive is constantly in an unnatural position for the pilot that will be forced to counterbalance the undesidered and unnatural forces for the motorcycle and then to a bigger effort in driving, to a consequent fall of the attention in the same driving and because of this exposing to a risck of accident due to the above mentioned motivations, while with the system that is object of the present invention the motorcycle has no variations and if there are are light variation not perceivable, his weight and his distribution of weights remains unchanged as when the motorcycle has been produced.

Well is comprised that several other variants could be brought to the present invention, as toothed belts instead chains, without in any case to go out from the object of how described and consequently claimed with reference to the enclosed drawing and from the dominion of the present invention

## Claims

1. Improved transmission system applied to motorcycles for the insert of rear wheels of oversized sectioncarachterized by the fact of to be constituted by a swing arm (F) having an oversized distance between his arms (B) for the housing of oversized wheel (R), said swing arm (F) being provided of seats (S), disposed subsequently to the seats (S1) of pivoting od said swing arm (F) for the housing in them (S), by known might, of a draft (A1) on a side of which (A1) are keyed two pinions (P2 and P3), the pinion (P2) results to be placed in an inner position respect to the pinion (P3), said pinions (P2-P3) resulting, the first (P2), connected by a chain (C1) to the pinion (P1) of the driven shaft of the gear box and the second pinion (P3) connected with a chain (C2) to the pinion (PR) solidally joint to the oversized wheel (R)
